# EUROPÄISCHE PATENTANMELDUNG

(11) **EP 0 733 459 A2**
(43) Veröffentlichungstag der Anmeldung: **25.09.1996**
(21) Anmeldenummer: 95114302.3
(22) Anmeldetag: 12.09.1995
(51) Int. Cl.: B29C 53/20, B29C 63/42, B65C 3/08

(54) **Schlauch aus thermoplastischer Schrumpffolie, Verfahren zu seiner Herstellung und seine Verwendung**

(30) Priorität: 23.09.1994 DE 4433962
(71) Anmelder: HOECHST AKTIENGESELLSCHAFT, 65929 Frankfurt am Main (DE)
(72) Erfinder: Peiffer, Herbert, Dr., D-55126 Mainz (DE); Schlögl, Gunter, Dr., D-65779 Kelkheim (DE)

(57) **Zusammenfassung**

Es wird ein Schlauch (2) aus querschrumpffähiger Folie aus thermoplastischem Kunststoff beschrieben. Der Schlauch (2) erhält bei der Flachlegung mehr als zwei Falten (8), die bei der Aufwicklung des flachgelegten Schlauches zu einer Rolle erhalten bleiben.

## Beschreibung

Die Erfindung bezieht sich auf einen Schlauch aus querschrumpffähiger Folie aus thermoplastischem Kunststoff, auf ein Verfahren zu seiner Herstellung und seine Verwendung. Die Erfindung bezieht sich weiterhin auf ein Verfahren zur Etikettierung von im wesentlichen zylindrischen Behältnissen.

Für die Rundumetikettierung von im wesentlichen zylindrischen Behältnissen mit Hilfe von wärmeschrumpffähigen Folien werden Folien benötigt, die einen hohen Schrumpf senkrecht zur Längsachse des Behältnisses aufweisen, d. h. die Folien müssen in Umfangsrichtung des Behälters schrumpfen. Man unterscheidet zwei Verfahren, in denen unterschiedliche Folien eingesetzt werden. Für das erste Verfahren werden Folien mit einem hohen Schrumpf quer zur Rollenrichtung, d. h. quer zur Maschinenlaufrichtung der Folie, eingesetzt. Diese Folien werden nach dem Zuschneiden zu einem Schlauch verarbeitet, über das Behältnis gestülpt und anschließend geschrumpft. Hier entspricht die Schrumpfrichtung der Querrichtung der Folie, d. h. die Folie schrumpft senkrecht zu ihrer Rollen- bzw. Maschinenlaufrichtung. Bei einem zweiten Verfahren werden Folien mit einem hohen Schrumpf in Rollenrichtung, d. h. längs der Maschinenlaufrichtung der Folie, benötigt. Hier wird die Folie nach dem Zuschnitt direkt von der Rolle verarbeitet. Bei diesem sogenannten Quereinschlag entspricht die Schrumpfrichtung der Längsrichtung der Folie, d. h. die Folie schrumpft längs der Rollen- bzw. Maschinenlaufrichtung.

Die vorliegende Erfindung bezieht sich auf einen Schlauch aus einer wärmeschrumpffähigen Folie, die sich für das erstgenannte Verfahren eignet, bei der - zumindest im relevanten Temperaturbereich - ein hoher Querschrumpf, d. h. ein hoher Schrumpf quer zur Rollen- bzw. Maschinenlaufrichtung der Folie, bei einem gleichzeitig niedrigen Längsschrumpf realisiert wird.

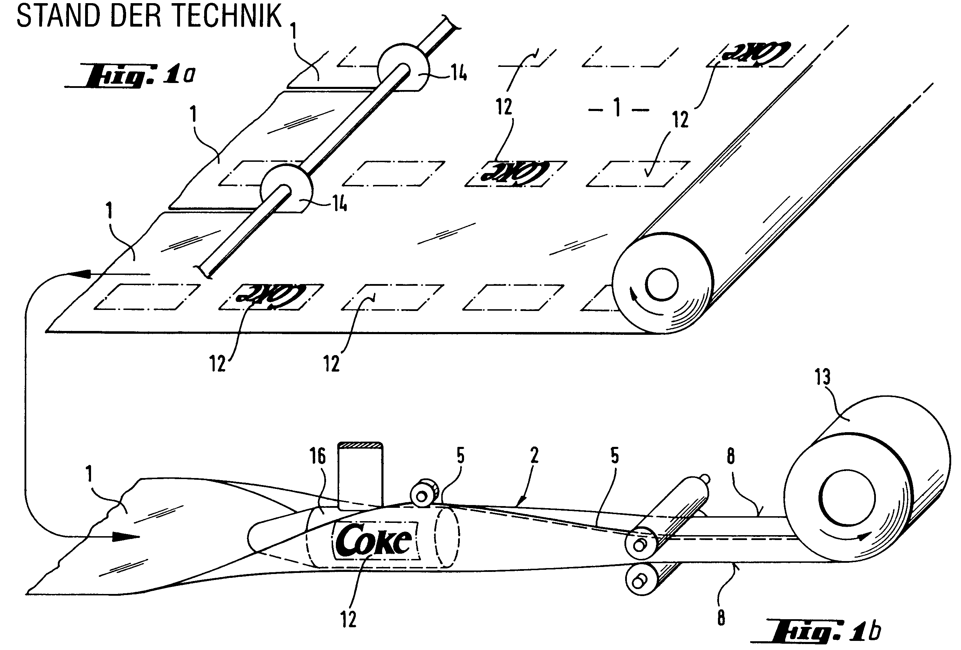

Die Verarbeitung solcher Folien nach dem Stand der Technik ist in Figur 1a bis 1e skizziert. Die Folie (1) wird bedruckt (12), geschnitten (14) (Fig. 1a), zu einem Schlauch (21 geformt (Dorn 16) und an den überlappenden Rändern miteinander verklebt. Der Schlauch (2) wird unter Bildung von zwei Falten (8) flachgelegt und zu einer Rolle (13) aufgewickelt (Fig. 1b). Bei der weiteren Verarbeitung, z. B. in der Glashütte, wird der Schlauch zu den einzelnen Rundumetiketten (6) geschnitten, die mit einer Aufsetzmaschine auf die Flasche (3) gestülpt werden (Fig. 1c). Bei dem anschliessenden Schrumpfvorgang (4) (Fig. 1d) legt sich das Etikett eng an die Wandung (7) der Flasche (3) an. Die Umfangsrichtung der Flasche (3) stimmt mit der Querrichtung der Folie (1) überein. Die Folie muß einen hohen Quer- und einen niedrigen Längsschrumpf besitzen. Ein hoher Längsschrumpf führt zu einem ungeraden und welligen Kantenabschluß des Etiketts (6). Insbesondere im Bereich der beiden Falten (8), welche durch die Flachlegung und Aufwicklung des Schlauchs (2) entstehen, treten optische Defekte in Form zweier Blasen (10) am Rand des Etiketts auf (Fig. 1e).

In der Verpackungsindustrie besteht ein zunehmender Bedarf an Schrumpfetiketten, welche gut verarbeitet werden können und die optisch einwandfrei aussehen. Infolge der Verpackungsverordnungen kommen in jüngster Zeit immer mehr Behältnisse zum Einsatz, die mit geringem Aufwand (geringer Umweltbelastung) rezyklierbar sind. Bei den Getränkeflaschen ist der Umbruch bereits im Gange: Anstelle der Glasflasche kommt die Kunststoffflasche, insbesondere die aus Polyethylenterephthalat (PET), immer mehr zum Einsatz.

Für ein vollständiges Recycling müssen die einzelnen Bestandteile der Flasche voneinander trennbar sein: Dies sind die PET-Flasche, der Schraubverschluß und das Etikett. Beim Recycling wird zunächst der Verbund aus Flasche, Schraubverschluß und Etikett geschreddert, danach werden die Schnitzel mittels Flotationsverfahren in die einzelnen Kunststoffarten separiert. Die PET-Schnitzel werden granuliert und über Cospritzgußverfahren wieder zur Herstellung von PET-Flaschen verwendet. Dieses Verfahren zur Separierung in die einzelnen Bestandteile erfordert unterschiedliche spezifische Gewichte von Flaschen- und Etikettenmaterial. Daher sind bei PET-Flaschen Etiketten aus olefinischen Kunststoffen wie Polypropylen (PP) oder Polyethylen (PE) oder Abmischungen von beiden Materialien bevorzugt.

Bei der Schrumpfetikettierung von PET-Flaschen muß der Schrumpfprozeß bei deutlich niedrigeren Temperaturen bzw. bei deutlich kleineren Verweilzeiten durchgeführt werden als bei der Schrumpfetikettierung von Glasflaschen. Beim Schrumpfprozeß darf die Glastemperatur von PET (ca. 70 °C) nicht merklich überschritten werden, sonst beult sich die PET-Flasche ein und wird unbrauchbar. Dieses Problem tritt bereits dann auf, wenn die PET-Flasche nur kurzfristig, d. h. für ca. 2 s ca. 20 °C, über den Glaspunkt erwärmt wird.

Durch die speziellen Bedingungen beim Aufschrumpfen, die eine möglichst geringe Wärmebelastung der PET-Flasche gewährleisten, kommt es bei der Schrumpfetikettierung dieser Behältnisart besonders häufig zu optischen Defekten des Etiketts (6). Die Probleme durch ungleichmäßiges Anliegen treten besonders am oberen Rand (15) des Etiketts auf, insbesondere dort, wo durch die Flachlegung des Schlauchs (2) zwei Falten (8) entstanden sind (Fig. 1b). Diese beiden Falten (8) führen dazu, daß das aufgesetzte Etikett (6) im Bereich der Falten (8) besonders weit von der Flaschenwandung (7) absteht (Fig. 1c).

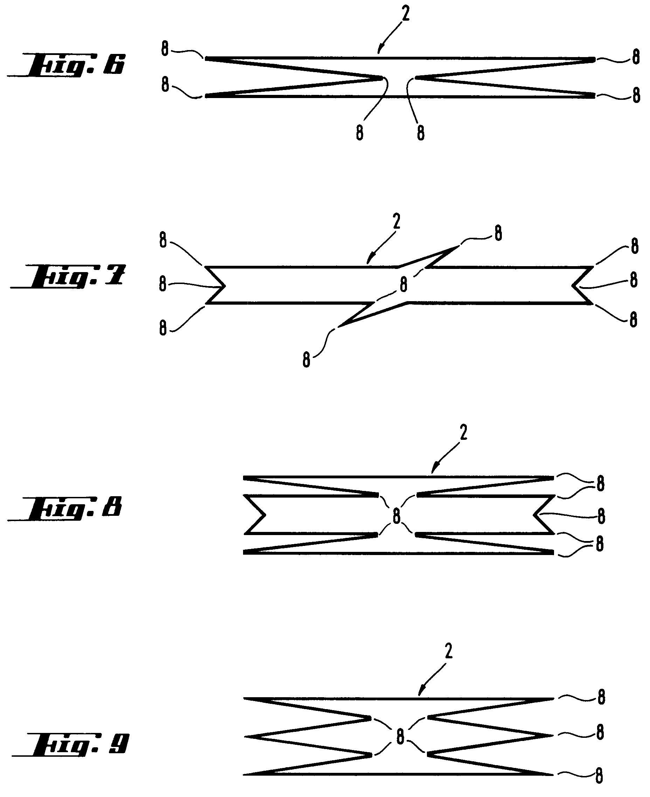

Für ein vollständiges Anschrumpfen des Etikettenrandes muß das Etikett im Faltenbereich (8) wesentlich stärker schrumpfen, wodurch sich auch der Längsschrumpf der Folie stärker bemerkbar macht. Das Etikett (6) zieht sich infolge dieses Längsschrumpfs am Rand (15) noch stärker zusammen. Es entsteht eine Delle (9), die rechts und links von der Falte (8) zwei mehr oder weniger ausgeprägte Blasen (10) nach sich zieht (Figur 1e und 4b). Das Etikett liegt unsauber an, und die etikettierte Flasche ist aus Marketing-Gesichtspunkten nicht akzeptabel.

Aufgabe der vorliegenden Erfindung war es daher, einen Schlauch aus wärmeschrumpffähiger Folie bereitzustellen, mit dem ein einwandfreies Anliegen des Etiketts, insbesondere der Etikettenränder, an den Behälter gewährleistet wird und bei dem insbesondere keine Eindellungen und Blasen im Faltenbereich des Etikettenrandes entstehen.

Die Aufgabe wird erfindungsgemäß durch einen Schlauch der eingangs genannten Gattung gelöst, dessen kennzeichnendes Merkmal darin besteht, daß der Schlauch bei der Flachlegung mehr als zwei Falten erhält, die bei der Aufwicklung des flachgelegten Schlauches zu einer Rolle erhalten bleiben.

Durch die erfindungsgemäße Flachlegung des Schlauches wird gemäß Figur 5c erreicht, daß der maximale Abstand X' des Etikettenrandes (15) zur Wandung (7) der Flasche (3) um das Maß Y geringer ist als der Abstand Z bei der Flachlegung nach dem Stand der Technik (Fig. 4a). Der Schrumpfweg im kritischen Bereich der Falten (8) wird durch die erfindungsgemäße Maßnahme (um Y) bedeutend geringer, wodurch einer Dellen- oder Blasenbildung an den Etikettenrändern (15) deutlich entgegengewirkt wird.

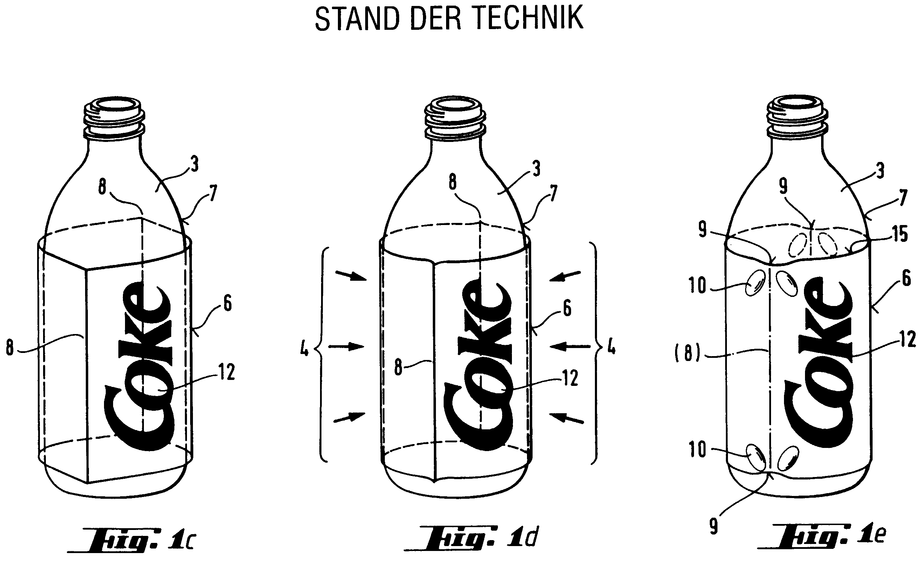

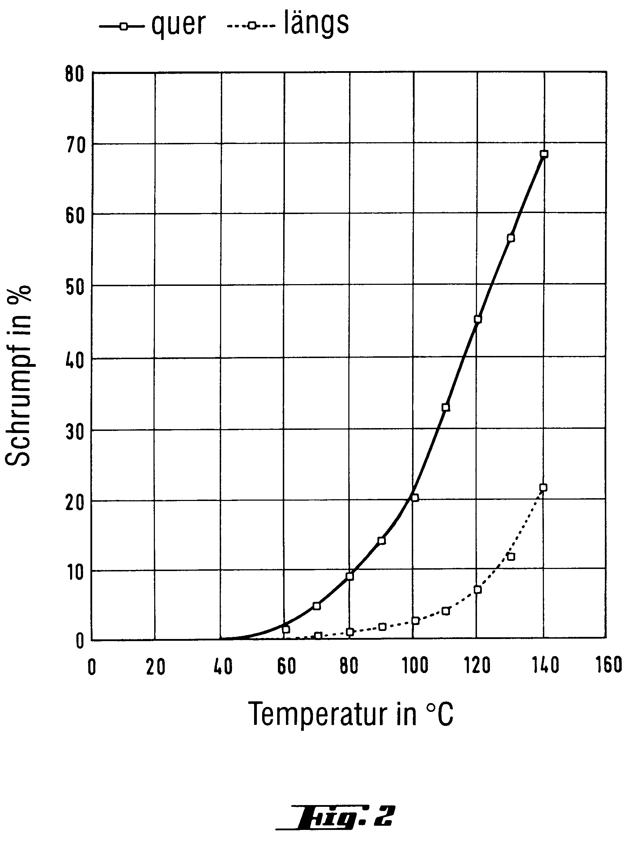

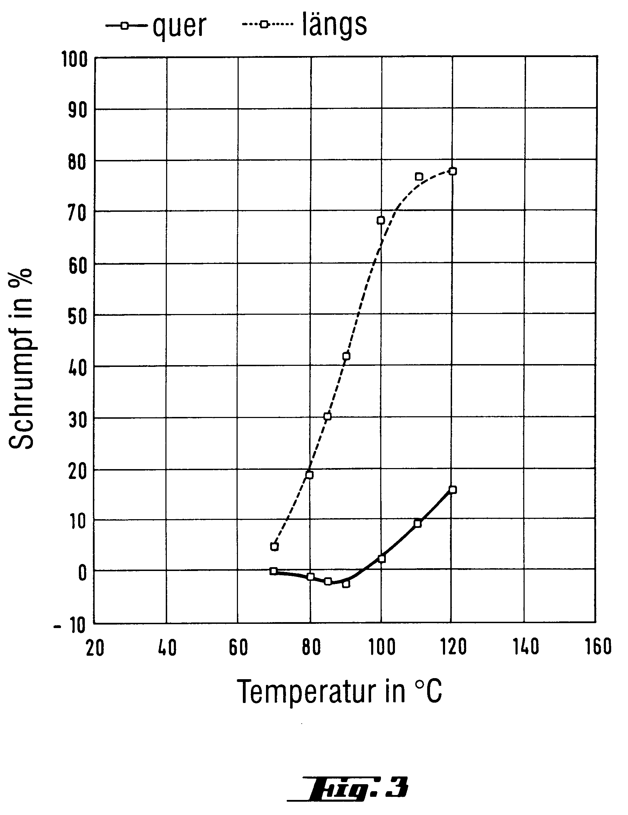

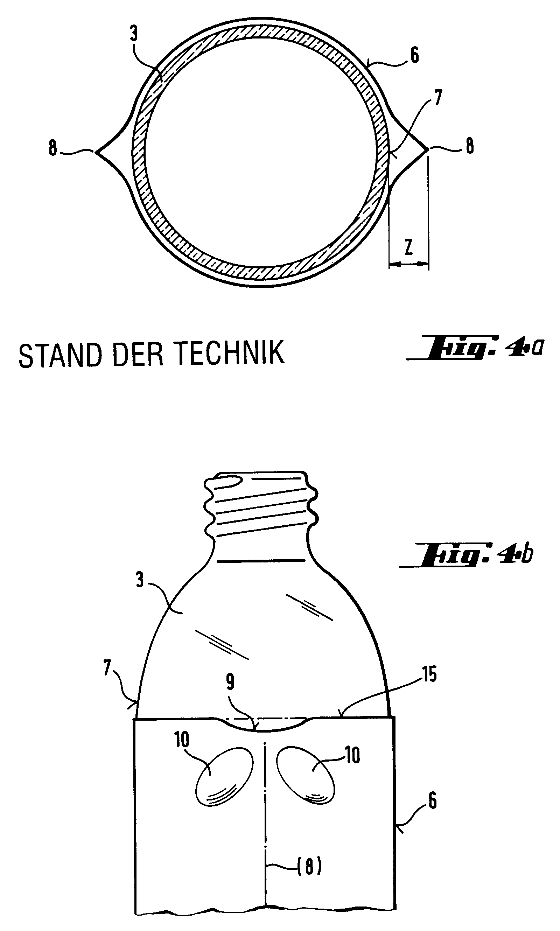

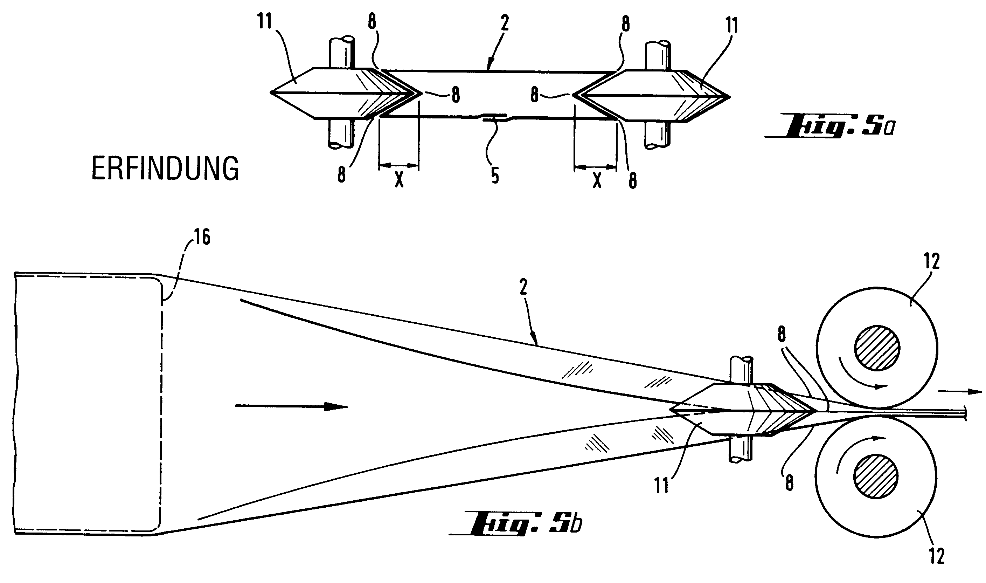

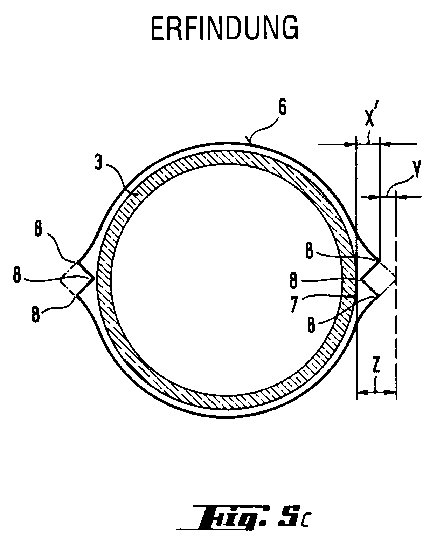

Durch die Aufteilung auf mehrere Falten (8) wird der Einfluß eines Längsschrumpfs auf das Schrumpfergebnis deutlich geringer. Eine Folie mit den in Figur 2 angegebenen Längsschrumpfwerten kann ohne Beanstandungen zur Herstellung von Schrumpfetiketten eingesetzt werden, wenn diese Folie über den erfindungsgemäßen Schlauch verarbeitet wird. Für eine wirtschaftliche Herstellung der Schrumpfetiketten ist dies von großer Bedeutung, da Folien mit einem höheren Restschrumpf in Längsrichtung mit erhöhter Maschinengeschwindigkeit und daher preiswerter produziert werden können. Dies bedeutet niedrigere Fertigungskosten für die Folie und für das Etikett. Weiterhin ist bei dem erfindungsgemäßen Schlauch von Vorteil, daß geringere Schrumpftemperaturen bzw. kleinere Verweilzeiten im Schrumpfofen eingestellt werden können als bei einer Verarbeitung der gleichen Folie als einfach flachgelegter Schlauch mit zwei Falten. Die Wärmebelastung der PET-Flasche nimmt deutlich ab, ohne daß Qualitätseinbußen beim Etikett in Kauf genommen werden müssen. Ein weiterer Vorteil ist, daß der Schlauchdurchmesser vergrößert werden kann, wodurch das Aufsetzen des Etiketts auf die Flasche erleichtert wird. Bei der Bedruckung der Etiketten brauchen nicht mehr spezielle Gleitfarben verwendet werden. Außerdem wurde gefunden, daß die Dicke der verwendeten Schrumpffolie herabgesetzt werden kann, ohne daß die Verarbeitbarkeit der Etiketten beeinträchtigt wird.

Erfindungsgemäß wird der Schlauch so flachgelegt, daß er mehr als zwei Falten erhält. Je nach Ausgestaltung erhält der Schlauch beim Flachlegen drei bis zwanzig Falten, vorzugsweise sechs bis zehn. Die Falten werden vorzugsweise derart gestaltet, daß sie mehr oder weniger gleichmäßig über den Umfang des aufgesetzten Etiketts verteilt sind und so die nachfolgende Wicklung des gefalteten Schlauchs nicht oder nur wenig gestört wird.

Die Herstellung des erfindungsgemäßen Schlauchs wird im folgenden näher erläutert. Figur 5a und b zeigt eine schematische Darstellung des Verfahrens zur Herstellung des erfindungsgemäßen Schlauches am Beispiel einer ausgewählten Ausführungsform der Erfindung.

Die querschrumpffähige Folie wird in der Regel zunächst bedruckt (vgl. Fig. 1a) und anschließend in Folienlängsrichtung zu streifenförmigen Bahnen geschnitten. Die Breite dieser Folienbahnen entspricht in etwa dem Umfang des späteren Rundumetiketts (plus doppelte Breite der Naht (5)). Die geschnittene Folienbahn wird zu einem Schlauch (2) geformt, und die überlappenden Ränder werden unter Bildung der Naht (5) gesiegelt oder verklebt. Nach dieser Nahtbildung werden die Falten (8) in den Schlauch (2) eingebracht. Dies erfolgt vorteilhaft durch doppelkeglige Rollen (11), welche neben den beiden Schlauchseiten angebracht sind (Figur 5a). Diese Rollen ragen um ein bestimmtes Maß X (Figur 5a) in den Schlauch (2) hinein. Durch den Abstand zwischen der Rolle (11) und dem Schlauch (2) und durch die Größe der Rolle wird die Größe der Faltenabschnitte festgelegt. Schließlich erfolgt die Flachlegung durch ein Walzenpaar (12), welches senkrecht zur Achse der Rollen (11) gelagert ist (Figur 5b), und abschließend die Aufwicklung des gefalteten Schlauchs (2) zur Rolle (13) (vgl. Fig 1b).

Kleinere Falten - so wie im Beispiel der Figur 5c dargestellt - sind vorteilhaft, da durch die Größe und die Anordnung der Falten die Breite der Schlauchrolle im Vergleich zu Rollen nach dem Stand der Technik nicht wesentlich verkleinert wird. Auf diese Rolle können bei vergleichbarem Durchmesser weiterhin etwa die gleiche Anzahl an Schlauchmetern wie nach dem Stand der Technik aufgewickelt werden. Versuche haben gezeigt, daß das Aufeinanderliegen der verdickten Kanten überraschenderweise keine zusätzlichen Probleme mit sich bringt.

Weitere zweckmäßige Ausgestaltungen des erfindungsgemäßen Schlauches sind in den Figuren 6 bis 9 dargestellt.

Figur 6 zeigt eine Ausführungsform des erfindungsgemäßen Schlauches (2) mit sechs Falten (8). Von Vorteil ist hierbei die gleichmäßige, nahezu symmetrische Aufteilung der Falten (8) über den Umfang des Etikettes (6) und die daraus resultierende gleiche Anzahl an Folienlagen über die Breite des flachgelegten Schlauches. Die dargestellte Lösung bietet sich insbesondere bei Flaschen mit großem Durchmesser (8 cm bis 20 cm) an.

In Figur 7 ist eine Ausgestaltung des Schlauches (2) mit zehn Falten (8) dargestellt. Gegenüber der Lösung nach Figur 5 zeichnet sich der Schlauch (2) durch den Vorteil aus, daß der flachgelegte Schlauch zwei weitere Auflageflächen in seiner Mitte aufweist, die dickenausgleichend wirken und der Rolle eine größere Stabilität verleihen.

Die in Figur 8 und in Figur 9 dargestellten erfindungsgemäßen Schläuche (2) stellen weitere mögliche Varianten der Anordnung von Falten (8) dar.

Als Folien zur Herstellung des erfindungsgemäßen Schlauchs sind grundsätzlich alle querschrumpffähigen Folien aus thermoplastischem Kunststoff geeignet, beispielsweise solche aus Polyvinylchlorid (PVC), Polystyrol (PS), Polyethylenterephthalat (PET) oder Polyolefinpolymeren (PP, PE). Querschrumpffähige Folien sind im Sinne der vorliegenden Erfindung solche, die einen Schrumpf in Querrichtung von mehr als 15 %, bezogen auf die Ausgangsdimensionen, bei 100 C und 15 min im Umluftofen aufweisen. Es ist wünschenswert, daß diese Folien gleichzeitig einen möglichst niedrigen Längsschrumpf aufweisen. Niedriger Längsschrumpf ist im Sinne der Erfindung weniger als 5 % in Längsrichtung bei den obengenannten Bedingungen, ebenfalls bezogen auf die Ausgangsdimensionen. Es ist zweckmäßig, daß die Folie bedruckbar sowie siegelfähig oder verklebbar ist, um eine einfache Nahtbildung zu ermöglichen.

Folien, die dieses Anforderungsprofil erfüllen, sind im Stand der Technik an sich bekannt und beispielsweise in EP-A-0 400 456 beschrieben auf welche hiermit ausdrücklich Bezug genommen wird.

Zur Herstellung des erfindungsgemäßen Schlauchs sind Polyolefinfolien, insbesondere mehrschichtige Polypropylenfolien, bevorzugt. Die Polypropylenfolien können sowohl transparent als auch opak/undurchsichtig sein. Übliche Schrumpffolien aus Polypropylen haben eine Dicke von 10 bis 100 µm, vorzugsweise 20 bis 80 µm, insbesondere 30 bis 70 µm.

An einem Beispiel soll der erfindungsgemäße Schlauch inklusive Folieneigenschaften dargestellt werden.

### Beispiel

### 1. Herstellung der Folie

Es wurde durch Coextrusion und anschließende stufenweise Orientierung in Längs- und Querrichtung eine transparente dreischichtige Folie mit symmetrischem Aufbau mit einer Gesamtdicke von 50 µm hergestellt. Die Deckschichten hatten eine Dicke von jeweils 0,6 µm.

### A-Basisschicht:

- 89,6 Gew.-%: statistisches Ethylen-Propylen-Copolymeres mit einem Ethylengehalt von 4,5 % von der Fa. Solvay mit dem Markennamen ®Eltex PKS 420
- 5,00 Gew.-%: isotaktisches Propylenhomopolymeres
- 5,00 Gew.-%: hydriertes Cyclopentadienharz mit einem Erweichungspunkt von 20 °C von der Fa. Exxon mit dem Markennamen ^{®}Escorez 5320
- 0,2 Gew.-%: N,N-bis-ethoxyalkylamin
- 0,2 Gew.-%: Erucasäureamid

### B-Deckschichten:

- 98,77 Gew.-%: statistisches Ethylen-Propylen-Buten-Terpolymeres der Fa. Solvay mit dem Markennamen ®Eltex PKS 319
- 0,33 Gew.-%: SiO₂ als Antiblockmittel mit einer mittleren Teilchengröße von 2 µm
- 0,90 Gew.-%: Polydimethylsiloxan mit einer Viskosität von 30 000 mm²/s

### Die Herstellungsbedingungen in den einzelnen Verfahrensschritten sind:

| | | | |
|---|---|---|---|
| Extrusion: | Temperaturen: | A-Schicht | 240 °C |
| | | B-Schichten | 240 °C |
| | Temperatur der Abzugswalze | | 30 °C |
| Längsstreckung: | Temperatur | | 115 °C |
| | Längsstreckverhältnis | | 1,7 |
| Querstreckung: | Temperatur | | 102 °C |
| | Querstreckverhältnis | | 8,5 |
| Fixierung: | Temperatur | | 70 °C |
| | Konvergenz | | 15 % |

Die Folie wurde nach der Querstreckung vor der Aufrollung einseitig mittels Coronaverfahren druckvorbehandelt, wobei eine Oberflächenspannung von 40 mN/m erzielt wurde. Die Folie hat die Schrumpfeigenschaften, wie sie in Figur 2 wiedergegeben sind.

### Herstellung des Schlauchs

In weiteren Verarbeitungsschritten wurde die Folie mittels Konterdruck bedruckt, geschnitten und zu einem erfindungsgemäßen Schlauch gemäß Figur 5a bis c gefaltet und anschließend aufgewickelt.

Im letzten Verarbeitungsschritt wurde das erfindungsmäßige Etikett auf eine 0,33 l-Flasche aus PET aufgesetzt und danach im Schrumpfofen bei einer Schrumpfofentemperatur von 300 °C und einer Verweilzeit von ca. 2 s aufgeschrumpft.

### Das Schrumpfergebnis war einwandfrei.

### Vergleichsbeispiel

Im Vergleich zum Beispiel wurde die Faltung des Schlauches nach dem Stand der Technik gemäß Figur 1a bis b durch einfache Flachlegung durchgeführt. Sonst wurden keine Änderungen vorgenommen. Das Ergebnis war nicht befriedigend. Am oberen Abschluß des Etiketts bildeten sich zwei Blasen, und der Etikettenrand war im Bereich der Faltung wellig. Das Etikett wurde nicht akzeptiert.

## Patentansprüche

1. Schlauch aus querschrumpffähiger Folie aus thermoplastischem Kunst stoff, dadurch gekennzeichnet, daß der Schlauch (2) bei der Flachlegung mehr als zwei Falten (8) erhält, die bei der Aufwicklung des flachgelegten Schlauches zu einer Rolle erhalten bleiben.

2. Schlauch nach Anspruch 1, dadurch gekennzeichnet, daß die Folie im wesentlichen aus Polyvinylchlorid, Polystyrol, Polyethylenterephthalat, Polypropylen oder Polyethylen besteht.

3. Schlauch nach Anspruch 1 und/oder 2, dadurch gekennzeichnet, daß die Folie eine Dicke von 10 bis 100 µm, vorzugsweise 20 bis 80 µm, insbesondere 30 bis 70 µm, aufweist.

4. Schlauch nach einem oder mehreren der Ansprüche 1 bis 3, dadurch gekennzeichnet, daß die Folie mehrschichtig ist und alle Folienschichten im wesentlichen aus Propylenpolymeren bestehen.

5. Schlauch nach einem oder mehreren der Ansprüche 1 bis 4, dadurch gekennzeichnet, daß die Folie einen Querschrumpf von mindestens 15 % und einen Längsschrumpf von höchstens 5 %, jeweils bestimmt bei 100 °C und 15 min im Umluftofen, jeweils bezogen auf die Ausgangsdimensionen, aufweist.

6. Verfahren zur Herstellung einer Schlauchrolle, dadurch gekennzeichnet, daß
a) eine Folienbahn (1) bedruckt wird;
b) die bedruckte Folienbahn in Längsrichtung zu schmaleren Folienbahnen geschnitten wird;
c) die geschnittene Folienbahn zu einem Schlauch (2) verarbeitet wird;
d) in den Schlauch mehr als zwei Falten (8) eingebracht werden;
e) der gefaltete Schlauch so zu einer Rolle aufgewickelt wird, daß die vorher eingebrachten Falten erhalten bleiben.

7. Verwendung eines Schlauchs nach einem oder mehreren der Ansprüche 1 bis 5 für die Rundumetikettierung von im wesentlichen zylindrischen Behältnissen.

8. Verwendung eines Schlauchs nach Anspruch 7, dadurch gekenn zeichnet, daß das Behältnis im wesentlichen aus thermoplastischem Kunststoff, vorzugsweise Polyethylenterephthalat, besteht.

9. Verwendung eines Schlauchs nach Anspruch 7, dadurch gekenn zeichnet, daß das Behältnis aus Glas oder Metall besteht.

10. Verfahren zur Etikettierung von im wesentlichen zylindrischen Behältnissen, dadurch gekennzeichnet, daß von einem Schlauch gemäß Anspruch 1 Abschnitte geschnitten und auf das Behältnis aufgesetzt werden und die Einheit aus Etikett und Behältnis wärmebehandelt wird.
